# EUROPEAN PATENT SPECIFICATION

(11) **EP 1 628 418 B1**
(45) Date of publication and mention of the grant of the patent: **17.10.2007**
(21) Application number: 05017767.4
(22) Date of filing: 16.08.2005
(51) Int. Cl.: H04B 10/213

(54) **Communication system, communication apparatus and method for accommodating subscriber line**
Kommunikationssystem, Kommunikationseinrichtung und Verfahren zur Aufnahme einer Teilnehmerleitung
Système de communication, dispositif de communication et méthode pour prendre en charge une ligne d'abonné

(30) Priority: 18.08.2004 JP 2004237831
(43) Date of publication of application: 22.02.2006
(73) Proprietor: NEC CORPORATION, Tokyo (JP)
(72) Inventor: Ozaki, Hirokazu, Tokyo (JP)
(74) Representative: Vossius & Partner

(56) References cited:
- WO-A-99/37050
- GB-A- 2 224 902
- US-A- 5 127 067
- US-B1- 6 327 400

## Description

The present invention relates to a technique using a subscriber line, and in particular, it relates to a communication system, a communication apparatus and method for accommodating a subscriber line.

Due to widespread use of ADSL (Asymmetric Digital Subscriber line) and the like, a broadband subscriber line has rapidly developed both at home and abroad.

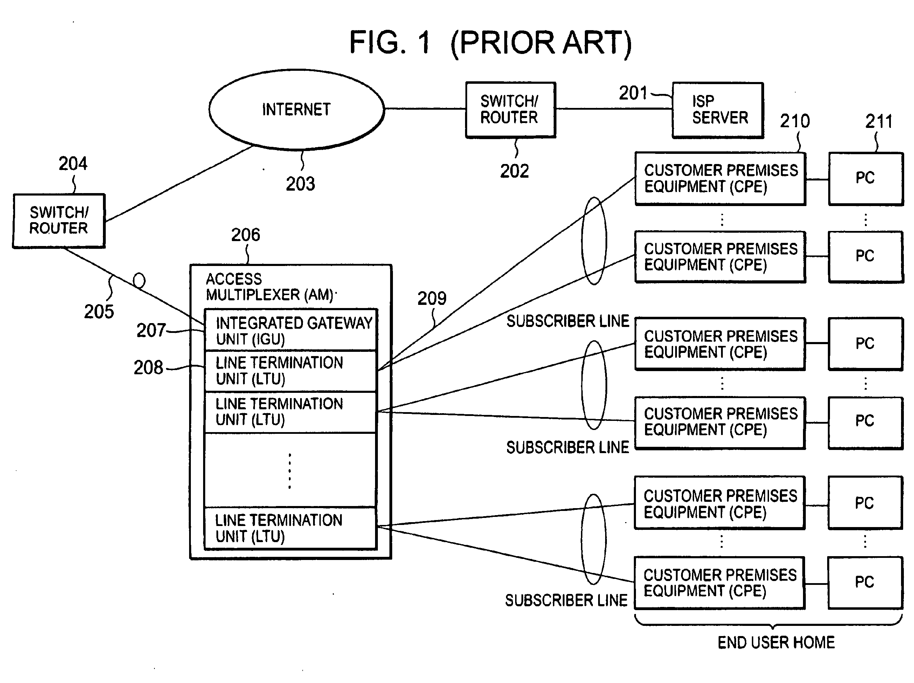

FIG. 1 shows a network configurational example of an Internet Access Service using access multiplexer [AM]. At the home of an end user, a PC (Personal Computer) 211 is connected to a subscriber line 209 through customer premises equipment [CPE] 210 (for example, see JP-A-2004-88379). A telephone office is provided with an access multiplexer 206, which is terminated with a plurality of subscriber lines 209, and multiplexes them into a high-speed signal. In the access multiplexer 206, there are mounted an integrated gateway unit [IGU] 207 and a line termination unit [LTU] 208. The IGU 207 multiplexes signals, and at the same time, performs a protocol conversion of the signals as occasion demands. Ahead of the access multiplexer 206, there is installed a switch/router 204. The signal is outputted to an Internet 203 through this switch/router 204. Ahead of the Internet 203, an ISP (Internet Service Provider) server 201 and the like are connected again through the switch/router 202.

Heretofore, many of the access multiplexers have been installed in the telephone office [GC (Group unit Center) office and the like] of a carrier. However, in recent years, to make connections also for remote customers, the access multiplexer has been required to be installed at a place remote from the telephone office. In that case, a plurality of access multiplexers are fanned out from the telephone office (hereinafter referred to as central office) to remote places and installed by optical fibers. At these remote places, in consideration of economical efficiency and space saving, compact access multiplexers are usually installed. Thus, the remote users are accommodated by the central office (to be connected to the apparatus by using communication lines).

Heretofore, the access multiplexers installed in such remote offices have been connected to the central office point-to-point. The function of multiplexing the lines from the remote offices is provided in the apparatus of the central office. Hence, it is necessary tomount a plurality of interface units on the apparatus of the central office in order to fan out remote apparatus pieces and, moreover, to multiplex them into one place. Consequently, for the apparatus of the central office, apparatus of high performance and high density package is required, and this increases the system cost. Thus, it is difficult to efficiently accommodate the access multiplexer installed in the remote office into the central office.

US-A-5127067 is directed to a local area network (LAN) and, more particularly to a LAN having a star topology, but using a ring protocol to connect each active node to two adjacent active nodes, one transmitting data to the node and the other receiving data from the node.

GB 2224902 provides an optical local area network transmission system having a star topology and adapted to behave either as a ring or a bus in dependence on the employed protocol.

US-A-6327400 provides circuitry for coupling network nodes to a passive network comprised of a single fiber that provides substantial protection against fiber breaks and/or optical interface failure on the network without the need for a second fiber.

Further, there is a problem of giving a notice and performing signal remedial at the time of defect occurrence and efficiently performing monitor and control for each of the access multiplexers installed in the remote office.

Hence, there is a pressing problem of efficiently accommodating the access multiplexers into the central office and, moreover, efficiently performing monitor and control.

To solve these problems, there is a method of connecting the remote apparatuses in tandem so as to be multiplexed. However, when a defect occurs in the transmission path and apparatus on the way, there arises a problem in that the apparatuses ahead thereof are all shut down (signals are interrupted).

An object of the present invention is to provide a communication system, a communication apparatus and method for accommodating a subscriber line which can solve the above described problems and efficiently accommodate the subscriber line and efficiently perform monitor and control.

The object of the invention is achieved with the features of the claims.

An exemplary communication system for accommodating the subscriber line of the present invention includes a main apparatus accommodating a plurality of subscriber lines, a plurality of remote apparatuses disposed in a radial pattern from the main apparatus and accommodating a plurality of subscriber lines, and a duct leading in a radial pattern from the main apparatus to each of the plurality of remote apparatuses.

The main apparatus and the plurality of remote apparatuses are connected in a ring pattern through a duct.

Thus, the communication system for accommodating the subscriber line of the present invention has each apparatus connected in a ring pattern, so that there is no need to dispose a function of multiplexing each remote apparatus in the main apparatus. Further, each apparatus is connected in a ring pattern, so that each remote apparatus is efficiently accommodated into the main apparatus. Further, in case a defect occurs at a certain place, giving a notice and performing signal remedial at the time of defect occurrence can be effected from both sides. Further, the main apparatus and each remote apparatus equally accommodate the subscriber line, so that the signal from the subscriber line is dispersed and collected in each apparatus. Further, since each apparatus is connected in a ring pattern, the signals of the subscriber line collected by each apparatus are efficiently collected.

An exemplary communication apparatus for accommodating the subscriber line of the present invention includes accommodating units for accommodating a plurality of subscriber lines. The communication apparatus for accommodating the subscriber lines is disposed from the main apparatus in a radial pattern, and is connected in a ring pattern through a duct disposed in a radial pattern from the main apparatus.

The communication apparatus for accommodating the subscriber line of the present invention in this way has each apparatus connected in a ring pattern, so that there is no need to dispose a function of multiplexing each apparatus in the main apparatus. Further, each apparatus is connected in a ring pattern, so that each apparatus is efficiently accommodated into the main apparatus. Further, in case a defect occurs at a certain place, both giving a notice and performing signal remedial at the time of defect occurrence can be effected from both sides. Further, each apparatus accommodates the subscriber line, so that the signal from the subscriber line is dispersed and collected in each apparatus. Further, each apparatus is connected in a ring pattern, so that the signals of the subscriber line collected by each apparatus can be efficiently collected.

An exemplary method of accommodating the subscriber line of the present invention connects the main apparatus accommodating a plurality of subscriber lines and a plurality of remote apparatuses accommodating a plurality of subscriber lines in a radial pattern through a duct leading from the main apparatus to each of the plurality of remote apparatuses from the main apparatus.

Thus, the method of accommodating the subscriber line of the present invention has each apparatus connected in a ring pattern, so that there is no need to dispose a function of multiplexing each remote apparatus in the main apparatus. Further, each apparatus is connected in a ring pattern, so that each remote apparatus is efficiently accommodated into the main apparatus. Further, in case a defect occurs at a certain place, giving a notice and performing signal remedial at the time of defect occurrence can be effected from both sides. Further, the main apparatus and each remote apparatus equally accommodate the subscriber line, so that the signal from the subscriber line is dispersed and collected in each apparatus. Further, since each apparatus is connected in a ring pattern, the signals of the subscriber line collected by each apparatus are efficiently collected.

An exemplary method of accommodating the subscriber line of the present invention has a plurality of communication apparatuses disposed in a radial pattern, and each of the plurality of communication apparatuses accommodates a plurality of subscriber lines, and each of the plurality of communication apparatuses is connected in a ring pattern through a duct disposed a radial pattern.

Thus, the method of accommodating the subscriber line of the present invention has each communication apparatus connected in a ring pattern, so that there is no need to dispose a function of multiplexing each communication apparatus in one place. Further, each communication apparatus is connected in a ring pattern, so that each remote communication apparatus is efficiently accommodated. Further, in case a defect occurs at a certain place, both giving a notice and performing signal remedial at the time of defect occurrence can be effected from both sides. Further, each communication apparatus accommodates the subscriber line, so that the signal from the subscriber line is dispersed and collected. Further, each communication apparatus is connected in a ring pattern, so that the signals of the subscriber line collected by each communication apparatus can be efficiently collected.

The exemplary aspects, features and advantages of the present invention will become more apparent from the following detailed description when taken in conjunction with the accompanying drawings wherein:
FIG. 1 is a block diagram showing an entire configuration of a communication system accommodating a subscriber line;
FIG. 2 is a block diagram showing a partial configuration of a communication system accommodating the subscriber line in a first exemplary embodiment of the present invention;
FIG. 3 is a block diagram showing an entire configurational example of the communication system accommodating the subscriber line in the first exemplary embodiment of the present invention;
FIG. 4 is a view showing a flow of upstreaming signals and downstreaming signals at normal operation in the first exemplary embodiment of the present invention;
FIG. 5 is a view showing a flow of upstreaming signals and downstreaming signals in case a defect occurs in a signal line within a duct 134 of FIG. 4;
FIG. 6 is a block diagram showing a configurational example of a first optical expansion unit mounted in a main apparatus of FIG. 2;
FIG. 7 is a block diagram showing a configurational example of a second optical expansion unit mounted in the main apparatus and the remote apparatus of FIG. 2;
FIG. 8 is a view showing an operation of the second optical expansion unit at normal operation in the first exemplary embodiment of the present invention; and
FIG. 9 is a view showing an operation of the second optical expansion unit at the time of defect occurrence in the first exemplary embodiment of the present invention.

A typical form of a communication system for accommodating the subscriber line of the present invention includes a main apparatus accommodating a plurality of subscriber lines, a plurality of remote apparatuses disposed in a radial pattern from the main apparatus and accommodating a plurality of subscriber lines, and a duct leading in a radial pattern from the main apparatus to each of the plurality of remote apparatuses. The main apparatus and the plurality of remote apparatuses are connected in a ring pattern through a duct.

A typical form of a communication apparatus for accommodating the subscriber line of the present invention includes accommodating units for accommodating a plurality of subscriber lines. The communication apparatus for accommodating the subscriber line is disposed in a radial pattern from the main apparatus, and is connected in a ring pattern through a duct disposed in a radial pattern from the main apparatus.

The typical form of a method of accommodating the subscriber line of the present invention connects the main apparatus accommodating a plurality of subscriber lines and a plurality of remote apparatuses accommodating a plurality of subscriber lines in a ring pattern through a duct disposed in a radial pattern in each of the plurality of remote apparatuses from the main apparatus.

The typical form of a method of accommodating the subscriber line of the present invention has a plurality of communication apparatuses disposed in a radial pattern, and each of the plurality of communication apparatuses accommodating a plurality of subscriber lines, each of the plurality of communication apparatuses being connected in a ring pattern through a duct disposed in a radial pattern.

Hereinafter, preferred exemplary embodiments of the present invention will be described in detail with reference to the drawings. It should be noted that the embodiments to be described below show specific examples to understand the present invention, and the scope of the present invention is not intended to be limited to these embodiments.

First, a communication system, a communication apparatus and accommodating method for accommodating the subscriber line according to the first exemplary embodiment of the present invention will be described below.

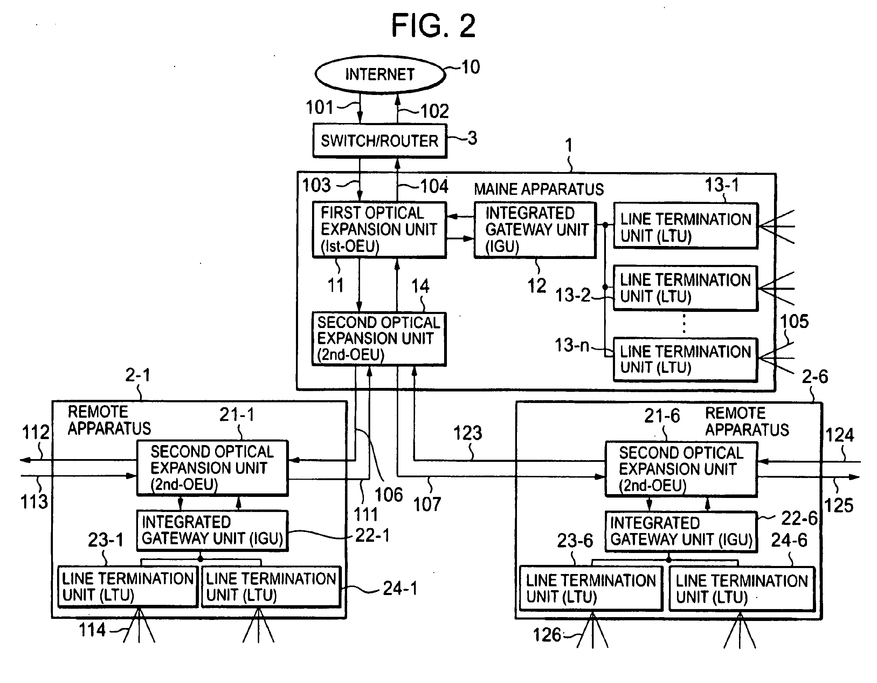

FIG. 2 is a block diagram showing a partial configuration of the communication system accommodating the subscriber line according to the first exemplary embodiment of the present invention. The communication system for accommodating the subscriber line according to the first exemplary embodiment of the present invention is configured by a main apparatus 1 which is access multiplexer [AM] of the central telephone office, remote apparatuses 2-1 to 2-6 (remote apparatuses 2-2 to 2-5 are not shown) which are the access multiplexers of the remote office of a small capacity located at the down-stream side of the main apparatus 1, and a switch/router 3 which connects the main apparatus 1 to an Internet 10.

The main apparatus 1 is configured by a first optical expansion unit [1st-OEU] 11, an integrated gateway unit [IGU] 12, line termination units [LTU] 13-1 to 13-n, and a second optical expansion unit [2nd-OEU] 14.

The remote apparatus 2-1 is configured by a second optical expansion unit [2nd-OEU] 21-1, an integrated gateway unit (IGU) 22-1, line terminating units [LTU] 23-1 and 24-1. Similarly, the remote apparatus 2-6 is configured by a second optical expansion unit [2nd-OEU] 21-6, an integrated gateway unit [IGU] 22-6, and line termination units [LTU] 23-6 and 24-6. Similar remote apparatuses 2-2 to 2-5 (not shown) are installed in a ring pattern so as to connect the left remote apparatus 2-1 to the right remote apparatus 2-6.

Referring to FIG. 2, a flow of down streaming signals will be described. The down streaming signals are inputted to the main apparatus 1 from the Internet 10 through the switch/router 3. The down streaming signal 103 inputted to the main apparatus 1 is branched into a signal to be processed within the main apparatus 1 and a signal to be transmitted to the remote apparatuses 2-1 to 2-6 in a 1st-OEU 11. Here, simple two branching (copying of the original signal) are performed.

The signal destined for the main apparatus 1 passes through the IGU 12 of the main apparatus 1 and is outputted to subscriber lines 105 through the LTUs 13-1 to 13-n. In the meantime, the signal destined for the remote apparatuses 2-1 to 2-6 is further branched by the 2nd-OEU 14, and becomes a clockwise signal 107 and a counter clockwise signal 106.

The counter clockwise signal 106 is inputted to the initial remote apparatus 2-1. The counter clockwise signal 106 is branched into a signal to be processed within the remote apparatus 2-1 and a signal 112 to be transmitted to down stream remote apparatuses 2-2 to 2-5 (not shown) in the 2nd-OEU 21-1. The signal destined for the remote apparatus 2-1, similarly to the main apparatus 1, passes through the IGU 22-1 of the remote apparatus 2-1, and is outputted to a subscriber line 114 through the LTUs 23-1 and 24-1. In the adjacent remote apparatus 2-2 (not shown), similarly to the remote apparatus 2-1, the down streaming signal is processed. To be more precise, the down streaming signal from the remote apparatus 2-1 is branched into a signal to be processed within the remote apparatus 2-2, and a signal to be transmitted to further down stream apparatuses 2-3 to 2-5. In this way, the down streaming signal is branched and distributed one after another from the remote apparatuses 2-1 to 2-6 connected in a ring pattern.

The clockwise signal 107 also, similarly to the counter clockwise signal 106, is inputted to the initial remote apparatus 2-6. The clockwise signal 107, similarly to the remote apparatus 2-1, is processed by the remote apparatus 2-6. However, a state of each apparatus is set up such that either of the counter clockwise signal or the clockwise signal is used in the down streaming signal.

Next, a description will be made by an example, wherein at normal operation, the counter clockwise signal is used as the down streaming signal, and the clockwise signal is used as the up streaming signal. These signals can be set to rotate in reverse. Referring to FIG. 2, a flow of up streaming signals will be described. The up-streaming signals of the subscriber line 126 accommodated in the remote apparatus 2-6 are inputted to the IGU 22-6 through the LTUs 23-6 and 24-6, and are multiplexed. The multiplexed signal is further inputted to the 2nd-OEU 21-6, and is transmitted as a signal 125 heading for the adjacent remote apparatus 2-5 (not shown).

Here, the 2nd-OEU 21-6 includes a function to multiplex the down streaming signal 107 transmitted from the main apparatus 1 together with the up streaming signal. However, the down streaming signal 107 is destroyed by the 2nd-OEU 21-6, and only the up streaming signal is outputted to the adjacent remote apparatus 2-5. In the adjacent remote apparatus 2-5 (not shown), similarly to the remote apparatus 2-6, the up-streaming signal is processed. To be more specific, the up streaming signal of the remote apparatus 2-5 and the up-streaming signal from the remote apparatus 2-6 of the preceding stage are multiplexed, and are transmitted to the remote apparatus 2-4 of the next stage.

In this way, the up-streaming signals from the remote apparatus 2-6 to the remote apparatus 2-1 connected in a ring pattern are collected in order and multiplexed one after another. From the last remote apparatus 2-1 to the main apparatus 1, the finally multiplexed up streaming signal is inputted. The main apparatus 1 multiplexes the up streaming signal collected by circulating around a ring pattern line and the up streaming signal of the subscriber line 105 accommodated by the main apparatus 1 itself by the 1st-OEU 11. The main apparatus 1 outputs the multiplexed signal to the switch/router 3 of the next stage.

As described above, the down streaming signals go around the ring shaped line (line connecting the remote apparatuses 2-1 to 2-6 connected in a ring pattern and the main apparatus 1) counter clockwise, and are distributed to each of the remote apparatuses 2-1 to 2-6 by broadcast. On the other hand, the up streaming signals circulate around the ring shaped line clockwise, and are multiplexed and collected by each remote apparatus.

The format and processing method of the signals are selected in conformity to the system of the access apparatus. For example, in the case of ADSL (Asymmetric Digital Subscriber Line), an optical ATM (Asynchronous Transfer Mode) signal is used. The down streaming signals are optically branched or cell-copied, and the up streaming signals are cell-multiplexed.

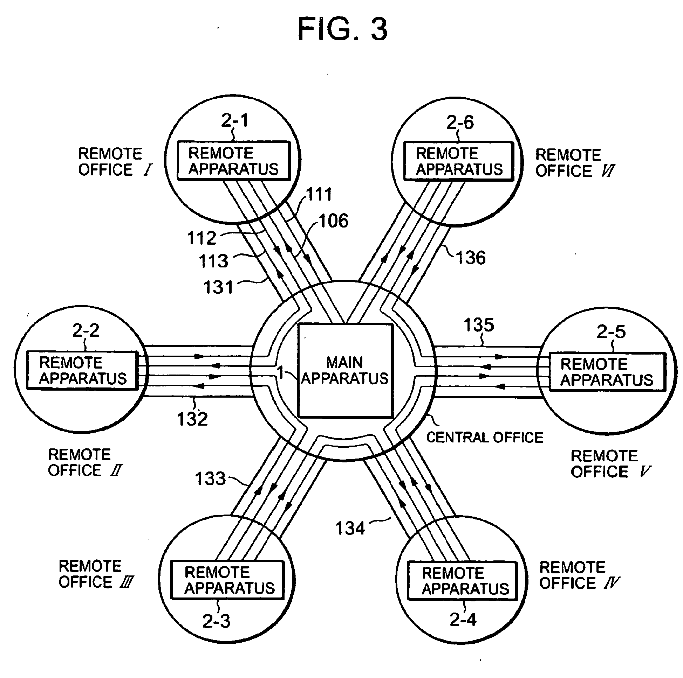

FIG. 3 is a block diagram showing an entire configurational example of the communication system for accommodating the subscriber line according to the first exemplary embodiment of the present invention. In FIG. 3, in the communication system for accommodating the subscriber line according to the first exemplary embodiment of the present invention, there is the main apparatus 1 of a telephone office (hereinafter referred to as [central office]) in the center, and from there, ducts 131 to 136 extend in a radial pattern to the remote apparatuses 2-1 to 2-6 of small capacity remote offices I to V1. Heretofore, the communications have been performed between the central office and each of the remote offices point to point. Hence, the ducts have been extended and disposed in a radial pattern from the central office to each of the remote offices. In contrast to this, in the present exemplary embodiment, the configuration of the ducts has been efficiently utilized. To be more specific, the signal lines between the main apparatus 1 and the remote apparatuses 2-1 to 2-6 are laid down so as to go and come back within the ducts 131 to 136. In this way, the main apparatus 1 and the remote apparatuses 2-1 to 2-6 are connected by the signal lines in a ring pattern. Hence, there is no need to newly provide the duct, and this makes it possible to connect the main apparatus 1 and the remote apparatuses 2-1 to 2-6 in a ring pattern. In the present exemplary embodiment, each of the remote apparatuses 2-1 to 2-6 is given a function of multiplexing the access signals. To be more specific, each of the remote apparatuses 2-1 to 2-6, as shown in FIG. 2, is accommodated with the subscriber lines (such as 114, 126, and the like), and is provided with IGUs 22-1 to 22-6, which multiplex these subscriber lines.

Heretofore, in the case of the point-to-point configuration, the multiplexing function of each remote office has been installed in the apparatus at the central office side. In the meantime, in the present exemplary embodiment, the multiplexing function of each remote office is dispersed and installed in the apparatus of the remote office side.

In the present exemplary embodiment, with the mesh configuration as described above, the small capacity remote apparatuses 2-1 to 2-6 which are fanned out and installed at the remote office can be efficiently accommodated in the main apparatus 1 of the central office and, moreover, a highly reliable line accommodating method can be realized as a whole.

In the present exemplary embodiment, the remote apparatuses 2-1 to 2-6 of the remote offices are connected in a ring pattern, thereby allowing the signals to circulate. In addition, each remote apparatus is given the multiplexing function of the signals. By so doing, it is possible to multiplex the signals into the apparatus of the central office without the smallest strain. At the same time, giving a prompt notice and performing effective signal remedial at the time of defect occurrence can be realized. Giving an alarm notice and a control of performing signal remedial are, for example, performed by using the overhead of a main signal. By so doing, the monitor and control system is simplified, and the system cost is reduced. At the same time, a system having high speed controllability and high reliability can be realized.

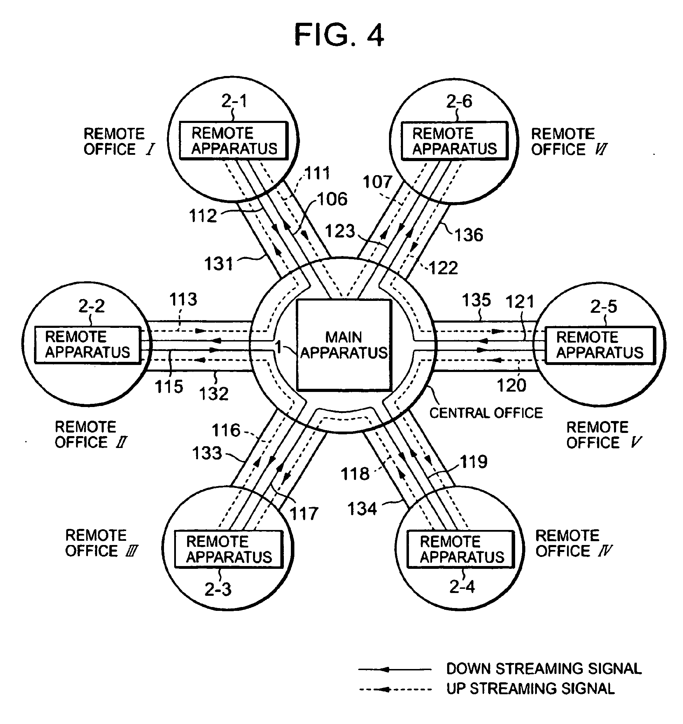

FIG. 4 is a view showing a flow of the up streaming signals and the down streaming signals at normal operation in the first exemplary embodiment of the present invention. In FIG. 4, a solid line shows a flow of the down streaming signals, and a dotted line shows a flow of the up streaming signals.

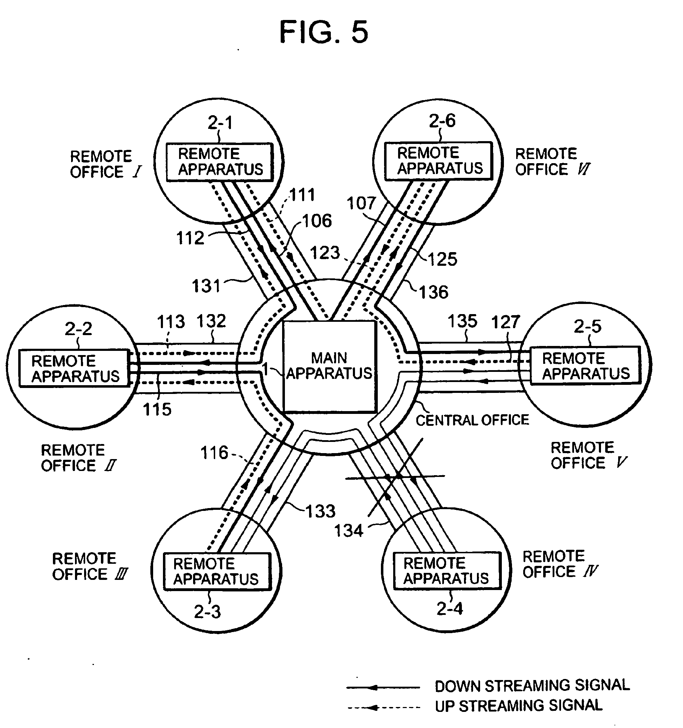

FIG. 5 is a view showing a flow of signals in the case where a defect occurs in the signal line within the duct 134 of FIG. 4 or in the interface unit and the like of the remote apparatus 2-4. Incidentally, the solid line shows a flow of the down streaming signals, and the dotted line shows a flow of the up streaming signals. In this case, according to a flow method of the normal signals of FIG. 4, the down streaming signals do not reach the remote apparatuses 2-5 and 2-6. Further, the up streaming signals of the remote apparatuses 2-5 and 2-6 do not reach the main apparatus 1. Hence, the remote apparatus 2-4 which has developed a defect is cut off from the ring pattern, and the remote apparatuses 2-5 and 2-6 have the signals circulated in reverse to the normal time, thereby securing the arrival of the signals.

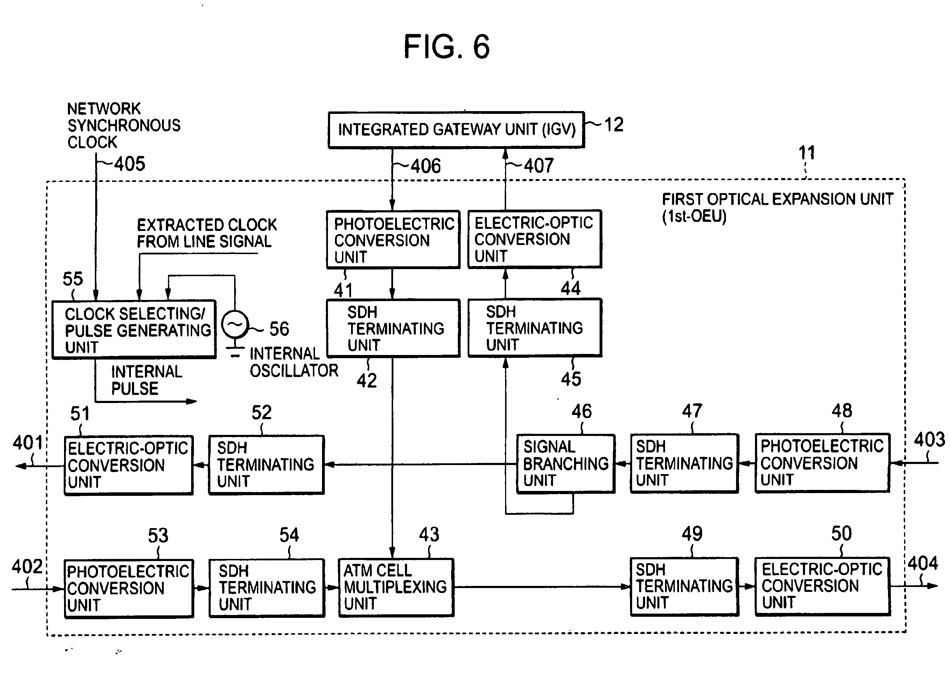

FIG. 6 is a block diagram showing a configurational example of the 1st-OEU 11 to be mounted on the main apparatus 1 of FIG. 2.

In FIG. 6, the input output interface of the 1st-OEU 11 assumes an optical signal, to be more specific, an ATM over SDH (Synchronous Digital Hierarchy). That is, the input output unit is disposed with photoelectric [O/E] conversion units 41, 48, and 53, and electric-optic [E/O] conversion units 44, 50, and 51, and SDH terminating units 42, 45, 47, 49, 52, and 54.

By using FIGS. 2 and 6, a flow of the up streaming signals and the down streaming signals will be described.

First, in FIG. 2, the up streaming signals from the subscriber lines 105 accommodated by the main apparatus 1 itself pass through the LTUs 13-1 to 13-n and are collected into the IGU 12. In the meantime, the up streaming signals from the subscriber lines 114, 126 and the like accommodated by the remote apparatuses 2-1 to 2-6 circulate clockwise for the remote apparatuses, and are collected, and then, are transmitted from the 2nd-OEU 21-1 of the last remote apparatus 2-1 to the 2nd-OEU 14 of the main apparatus 1 as an up streaming signal 111.

Next, in FIG. 6, an up streaming signal 406 of the IGU 12 and an up streaming signal 402 from the 2nd-OEU 14 are multiplexed by an ATM cell multiplexing unit 43. The multiplexed up streaming signal is terminated by the SDH terminating unit 49, and passes through the electric-optic [E/O] conversion unit 50, and then, is transmitted to the adjacent switch/router 3 as a signal 404.

In the meantime, a down streaming signal 403 from the adjacent switch/router 3 is branched in two by a signal branching unit 46. One of the branched signals is transmitted to the IGU 12 as a down streaming signal 407 within the main apparatus 1, and passes through the LTUs 13-1 to 13-n from the IGU 12, and is transmitted to the subscriber lines 105 as the down streaming signal. The other of the branched signals is transmitted to the 2nd-OEU 14 as a down streaming signal 401, and then, is transmitted to each of the remote apparatuses 2-1 and 2-6 from the 2nd-OEU 14 as down streaming signals 106 and 107.

Reference numeral 405 of FIG. 6 denotes a network synchronous clock supplied from an intra-office clock generation device (not shown), and is used for clock replacement of SDH. In a clock selecting/pulse generation unit 55, either of an intra-office clock, a transmission path extraction clock, and a clock generated in-device (clock from an internal oscillator 56) is selected, and a pulse necessary for each unit in the device is generated and distributed. Usually, the intra-office clock is used.

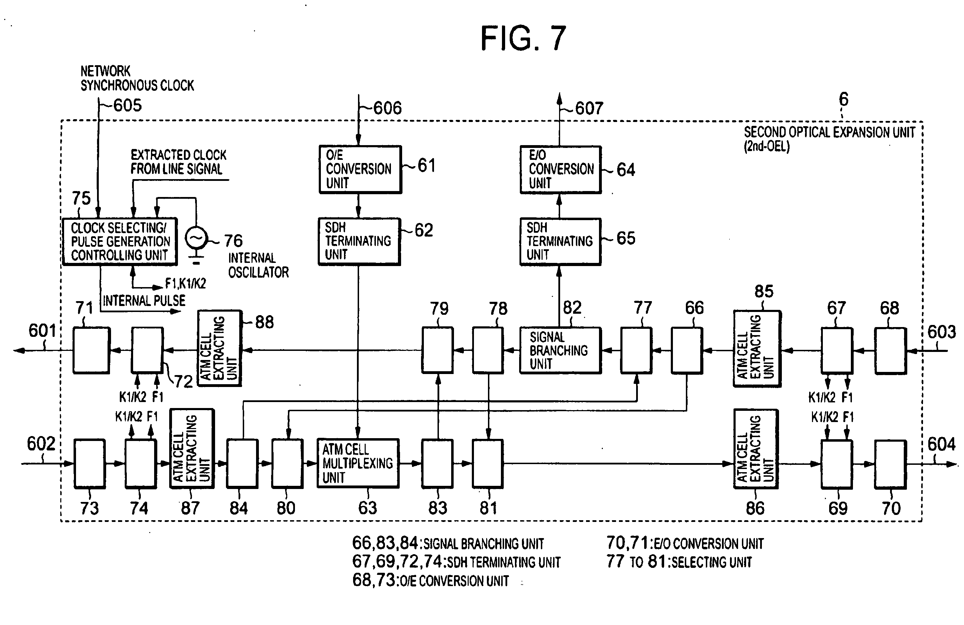

FIG. 7 is a block diagram showing a configurational example of the 2nd-OEUs 14, 21-1 to 21-6 to be mounted on the main apparatus 1 and the remote apparatuses 2-1 to 2-6 of FIG. 2. However, in FIG. 7, the 2nd-OEU 14 of the main apparatus 1, and the 2nd-OEUs 21-1 to 21-6 of the remote apparatuses 2-1 to 2-6 are taken as a 2nd-OEU 6. However, signals 606 and 607 are connected to the 1st-OEU 11 in the case of the 2nd-OEU 14 of the main apparatus 1, and are connected to the IGUs 22-1 to 22-6 in the case of the 2nd-OEU 21-1 to 21-6 of the remote apparatuses 2-1 to 2-6.

In FIG. 7, the 2nd-OEU takes the configuration of the 1st-OEU 11 as a basic configuration, and is configured by the addition of selection units 77 to 81 for reversing the signal circulating direction, signal branching units 66 and 82 to 84, and a clock selecting /pulse generation controlling unit 75. In the present exemplary embodiment, the selection units 77 to 81 and the signal branching units 66 and 82 to 84 are disposed as shown in FIG. 7, so that the circulating direction of the up streaming signals and the down streaming signals can be changed over.

Reference numerals 85 to 88 of FIG. 7 denote ATM cell extracting units. The ATM cell extracting units 85 to 88 are circuits for extracting a main signal cell as occasion demands to avoid useless signal multiplexing. The clock selecting/pulse generation controlling unit 75 is mounted with a control function for controlling the selection units 77 to 81 and the ATM cell extracting units 85 to 88 based on the overhead information (F1 and K1/K2) received from the SDH terminating units 67 and 74 in addition to the clock selecting function and the pulse generating function of the clock selecting/pulse generation unit 55 shown in FIG.6.

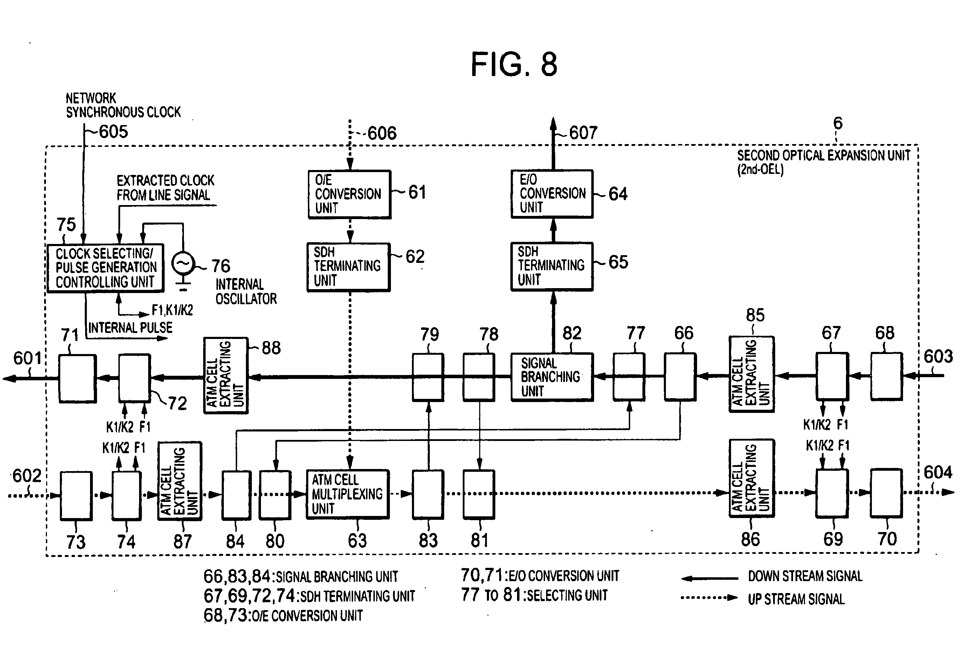

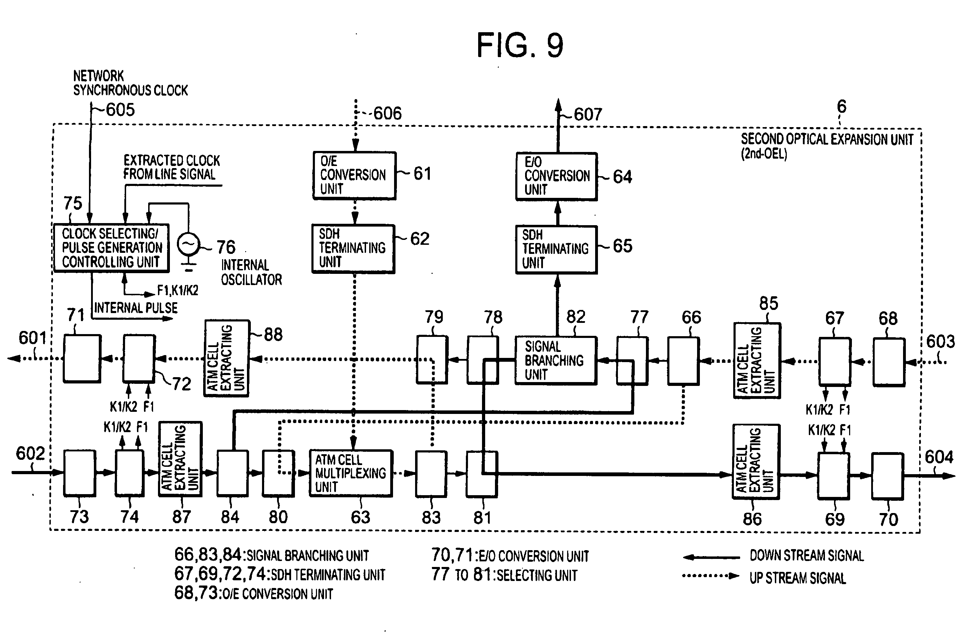

FIG. 8 is a view showing an operation of the 2nd-OEU 6 at normal operation in the first exemplary embodiment of the present invention. FIG. 9 is a view showing the operation of the 2nd-OEU 6 at the time of defect occurrence in the first exemplary embodiment of the present invention. Referring to these FIGS. 8 and 9, the operation of the 2nd-OEU 6 will be described.

When the selecting units 77 to 81 are operated as shown in FIG. 8, the down streaming signal circulates counter clockwise from signals 603 to 601, and the up streaming signal circulates clockwise from signals 602 to 604. In contrast to this, when the selecting units 77 to 81 are operated as shown in FIG. 9, the down streaming signal circulates clockwise from signals 602 to 604, and the up streaming signal circulates counter clockwise from signals 603 to 601. Further, to be more specific, in FIG. 8, a down streaming signal 603 is branched at a signal branching unit 82, and one of the branched signals is outputted to a down streaming signal 607, and the other is outputted as a signal 601. In this way, the down streaming signal circulates counter clockwise. An up streaming signal 602 is multiplexed by an up streaming signal 606 and the ATM cell multiplexing unit 63, and is outputted as an up streaming signal 604. In this way, the up streaming signal circulates clockwise. In the meantime, in FIG. 9, a down streaming signal 602 is transmitted to the signal branching unit 82 from a signal branching unit 84, and is branched here. One of the branched signals is outputted to the down streaming signal 607, and the other is outputted as a down streaming signal 604 through the selecting units 78 and 81. In this way, the down streaming signal circulates clockwise. An up streaming signal 603 is inputted to the ATM cell multiplexing unit 63 through the signal branching unit 66 and a selecting unit 80. Here, the up streaming signal 603 is multiplexed with the up streaming signal 606, and is outputted as an up streaming signal 601 through a signal branching unit 83 and a selecting unit 79. In this way, the up streaming signal circulates counter clockwise. In this way, in the present exemplary embodiment, it is possible to easily change the circulating direction of the signal. However, the directions 606 and 607 of the input output signals are unchangeable both for FIGS. 8 and 9.

In the case of the 2nd-OEU 14 of the main apparatus 1, the connection is slightly different from the above described. To the directions 603 and 604 is connected the 1st-OEU 11, and to the directions 606 and 607 is connected the 2nd-OEU 21-1 of the remote apparatus 21-1, and to the directions of 601 and 602 is connected the 2nd-OEU 21-6 of the remote apparatus 2-6. The down streaming signal 603 from the 1st-OEU is branched at the signal branching unit 82, and is outputted to each of the remotes apparatuses 2-1 and 2-6 as the down streaming signals 607 and 601, and the up streaming signals 606 and 602 from the remote apparatuses 2-1 and 2-6 are multiplexed at the ATM cell multiplexing unit, and are outputted to the 1st-OEU 11 as the up streaming signal 604. Incidentally, in the case of the 2nd-OEU 14 of the main apparatus 1, there is not any particular need to change the directions of the down streaming signal and the up streaming signal. Hence, it is even possible to omit the signal branching units 66, 83 and 84 and the selecting units 77 to 81.

Next, warning notice and signal changeover operations using the overhead of the main signal in the communication system and the accommodating method for accommodating the subscriber line according to the first exemplary embodiment of the present invention will be described.

The overhead of the SDH is defined so as to be used for various applications. From among which, a F1 byte can be freely used as user channel. In the appendix I of ITU-T (International Telecommunication Union-Telecommunication Standardization Sector) recommendation G.783, there is mentioned a method of performing defect estimations of the SDH devices connected in tandem. To be more specific, bit allotment is decided so as to display the number (ID) of a defect apparatus and a state of defect. By inputting these pieces of information to the F1 byte by a defect detection device, the defect place and the defect state are notified to terminal apparatus.

When this is applied to the present apparatus, it is possible to notify the main apparatus of the number (ID) and the defect state of the defect remote apparatus. Similarly to the ITU recommendation, when the six bits of the first half are allotted to the apparatus number, it is possible to identify 63 sets of the apparatuses. Further, when the two bits of the last half are allotted to the defect state, it is possible to notify the main apparatus of three different states.

As shown in FIG. 5, a case is assumed, wherein a defect occurs in the signal line within the duct 134 or in the remote apparatus 2-4, and the signal cannot be received by the remote apparatus 2-5. The remote apparatus 2-5 allows a clock of own apparatus to re-synchronize with the signal, and inserts the ID and the signal receiving state of own apparatus into the F1 byte of the up streaming signal 127, and notifies the main apparatus 1 of the central office accordingly. In the main apparatus 1, the F1 byte is always monitored, and a defect detection device and a defect state are detected. As the overhead used for the transmission path changeover of the SDH, there is a K1/K2 byte. Into this byte, the main apparatus 1 inserts information specifying the circulating direction (either clockwise or counter clockwise) of the signals and the device information (ID) adapted to that information, whereby the signal circulating directions at the normal time and at the time of defect occurrence are shown for each of the remote apparatuses 2-1 to 2-6.

Here, the clock selecting/pulse generation controlling unit 75 of the 2nd-OEU 6 of the main apparatus 1 becomes a control source of the defect estimation by the F1 byte and the 2nd-OEUs 21-1 to 21-6 of each of the remote apparatuses 2-1 to 2-6 by the K1/K2 byte. The defect information on the F1 byte is outputted to apparatus operation system, and is displayed as apparatus warning. Further, the main apparatus 1 calculates which remote apparatus should select which circulating direction based on the F1 byte. By this calculation, the main apparatus 1 gives instructions to each apparatus on the circulating direction of the signals by the K1/K2 byte. Further, each of the remote apparatus 2-1 to 2-6 executes the insertion of the defect information into the F1 byte and the setup of the circulating directions based on the K1/K2 byte. While these operations can be realized by execution of the program in CPU (Central Processing Unit), through the realization of everything by a hardware circuit, high-speed defect estimation and changeover operations can be realized.

In this way, in the present exemplary embodiment, through the connection of the remote apparatuses 2-1 to 2-6 in a ring pattern, the multiple separating function of the signal is dispersed and disposed within the system. Hence, a load of the signal processing and mounting of the function in the main apparatus 1 is reduced, thereby reducing the entire cost of the system.

Further, in the present exemplary embodiment, the direction of the signal circulating the remote apparatuses 2-1 to 2-6 connected in a ring pattern is changed over as occasion demands. Hence, the remedial of the main signal is realized, and the energizing of the main signal other than at the place of defect occurrence can be secured.

Further, in the present exemplary embodiment, by using the overhead of the main signal circulating the remote apparatuses 2-1 to 2-6 connected in a ring pattern, giving a warning notice and a changeover control are performed. Hence, prompt warning control operation can be realized.

Incidentally, in the present exemplary embodiment, the subscriber line is assumed as the ADSL line, and the multiplexed signal as the optical ATM signal. However, the present invention does not define the signal transmission system. As the subscriber line, it is possible to use also other DSL systems (for example, VDSL: Very high data rate Digital Subscriber Line), and an electrical or optical Ethernet (registered trade mark).

Further, in the present invention, it is possible for the multiplexed signal to adopt also other systems such an optical Ethernet (registered trade mark) or SONET (Synchronous Optical Network)/SDH line multiplexing. It is also possible to turn the signal circulating directions at normal operation and at the time of defect occurrence in reverse to the present exemplary embodiment.

In the present exemplary embodiment, an example is shown in which the IGU 12, the 1st-OEU 11, and the 2nd-OEU 14 are made a separate unit. Further, an example is shown in which the IGU 22-1 and the 2nd-OEU 21-1, and the IGU 22-6 and the 2nd-OEU 21-6 are made a separate unit. However, it is possible to configure these units by one unit. For example, it is possible to realize the 1st-OEU 11 and the 2nd-OEU 14 by one unit. Further, in addition to this, it is possible to realize the IGU 12 by one unit. Besides, it is possible also to realize each of the 2nd-OEUs 21-1 to 21-6 and each of the IGUs 22-1 to 22-6 by one unit.

In the present exemplary embodiment, while the up streaming signals and the down streaming signals are transmitted by a separate optical fiber, a configuration can be made such that these up streaming and down streaming multiplexing signals are subjected to wavelength multiplexing, and are transmitted by a piece of the optical fiber.

In the present exemplary embodiment, the warning uses the F1 byte of the SDH, and the changeover control signal uses the K1/K2 byte. Further, in the present exemplary embodiment, as described above, the main apparatus 1 performs the changeover control by the K1/K2 byte. However, it is possible to use other overheads or other control cell/packets for the warning and changeover control signals. In this case, each of the remote apparatuses 2-1 to 2-6 monitors a state of the signal, and based on the monitoring result, it is possible to changeover a switch to a local office by a control with distributed independent controller.

Next, the communication system and accommodating method for accommodating the subscriber line using the control with distributed independent controller will be described below as another exemplary embodiment of the present invention.

As the control with distributed independent controller, there is the following method. First, identification information for identifying up and down streaming signals is inserted into the overhead of the main signal, and is transferred to the down stream apparatus. The down stream apparatus looks at the overhead of the received signal and determines whether it is the up streaming signal or the down streaming signal. Describing more specifically, the main apparatus 1 of the central office transmits the down streaming signals in both left and right directions. In this way, at the remote apparatus side where the down streaming signal does not arrive, the receiving direction of the down streaming signal is changed over, so that the down streaming signal can be received. At normal operation, the terminal apparatus (the remote apparatus 2-6 of FIG. 3) transmits the up streaming signal in the right direction. Hence, each of remote apparatuses 2-1 to 2-5 determines the circulating direction of the signal from the identifying information on the counter clockwise signal (down streaming signal), and sets up a switch.

The operation at the time of detecting the defect in each of the remote apparatuses will be described below. The apparatus having detected the defect of the down streaming signal reverses receiving and transmitting directions of the signal by changing over the switch, and at the same time, rewrites the identification information on the overhead. The defect means a signal fail or an alarm indication signal [AIS] or the like. The apparatus having detected the defect (signal fail) of the up streaming signal only issues the AIS signal to its transmission source, but without changing over the switch. The apparatus having detected the defect in both the up streaming signal and the down streaming signal performs the operation carried out at the time of detecting the down streaming signal fail.

For example, as shown in FIG. 5, a case is assumed, wherein four pieces of the signals coming in and out the remote apparatus 2-4 become all failed. The remote apparatus 2-5 detects the signal fail of the down streaming signal, and reverses the directions of the up streaming signal and the down streaming signal by changing over the switch. The remote apparatus 2-6 reverses the directions of the up streaming signal and the down streaming signal by changing over the switch according to the identification information transmitted from the remote apparatus 2-5. In the meantime, the remote apparatus 2-3 detects the signal fail of the up streaming signal, and transmits the AIS signal to the remote apparatus 2-4 in replacement of the down streaming signal.

Hence, the remote apparatus 2-1 to 2-3 transmit and receive the signals in the direction of normal operation, while the remote apparatuses 2-5 and 2-6 transmit and receive the signals in the direction at the time of defect occurrence. In this way, in the present exemplary embodiment, by performing control with distributed independent controllers, a prompt changeover can be performed at the time of defect occurrence. The transmission time of the control signal from the main apparatus 1 of the central office can be shortened. Further, in the present exemplary embodiment, by performing control with distributed independent controllers, the processing amount of the control unit can be reduced in the main apparatus 1 of the central office, and the load of the control unit can be reduced.

While the exemplary embodiment of the present invention has been described as above, these configurations may be combined and used or a part of the configuration may be changed.

As described above, the communication system, the communication apparatus and the method for accommodating the subscriber line of the present invention have the following advantages.

The present invention has the advantages in that the subscriber line can be efficiently accommodated, and the giving of notice and performing signal remedial at the time of the defect occurrence can be realized.

While the present invention has been described in connection with certain exemplary embodiments, it is to be understood that the subject matter encompassed by way of this invention is not to be limited to those specific embodiments. On the contrary, it is intended for the subject matter of the invention to include all alternatives, modifications and equivalents as can be included within the scope of the following claims.

Further, the inventor's intent is to retain all equivalents of the claimed invention even if the claims are amended later during prosecution.

## Claims

1. A communication system for accommodating a subscriber line, comprising:
a main apparatus (1) accommodating a plurality of subscriber lines;
a plurality of remote apparatuses (2-1, ..., 2-6) disposed around said main apparatus (1) and accommodating a plurality of subscriber lines; and
a plurality of ducts (131, ..., 136) disposed in a radial pattern to each of said plurality of remote apparatuses from said main apparatus (1),
wherein said main apparatus and said plurality of remote apparatuses (2-1, ..., 2-6) are connected in a ring pattern through said plurality of ducts,
wherein down streaming signals to said plurality of remote apparatuses (2-1, ..., 2-6) from said main apparatus circulate each apparatus connected in a ring pattern, and are branched and distributed in each of said plurality of remote apparatuses,
wherein up streaming signals to said main apparatus (1) from said plurality of remote apparatuses circulate each apparatus connected in a ring pattern, and are multiplexed and collected by each of said plurality of remote apparatuses (2-1, ..., 2-6),
wherein each of said up down streaming signals is attached with up/down identification information on its overhead, and
wherein each of said plurality of remote apparatuses comprises a circuit for changing over the circulating directions of the said down streaming signal and said up streaming signal based on said identification information.

2. The communication system for accommodating the subscriber line according to claim 1,
wherein a signal line for connecting said main apparatus (1) and said plurality of remote apparatuses (2-1, ..., 2-6) in a ring pattern is laid down within said plurality of ducts (131, ..., 136) disposed in a radial pattern.

3. The communication system for accommodating the subscriber line according to claim 1,
wherein each of said plurality of remote apparatuses (2-1,...,2-6) is adapted to monitor a state of the signal, and said circuit is adapted to independently change over the circulating directions of said up streaming signal and said down streaming signal based on the monitoring result.

4. The system according to any one of claims 1 to 3,
wherein the multiplexing of said up streaming signals is either of a cell multiplexing, a packet multiplexing or a line multiplexing.

5. The system according to any one of claims 1 to 4,
wherein said remote apparatus (2-1, ..., 2-6) comprises a circuit for multiplexing the up streaming signal from the adjacent apparatus and the up streaming signal from within own apparatus and, moreover, for branching them into the down streaming signal to the adjacent apparatus and the down streaming signal into own apparatus.

6. A method of accommodating a subscriber line,
wherein a main apparatus accommodating a plurality of subscriber lines and a plurality of remote apparatuses accommodating a plurality of subscriber lines are connected in a ring pattern through a plurality of ducts disposed in a radial pattern to each of said plurality of remote apparatuses from said main apparatus,
wherein down streaming signals to said plurality of remote apparatuses from said main apparatus circulate each apparatus connected in a ring pattern, and are branched and distributed by each of said plurality of remote apparatuses,
wherein up streaming signals to said main apparatus from said plurality of remote apparatuses circulate each apparatus connected in a ring pattern, and are multiplexed and collected by each of said plurality of remote apparatuses,
wherein each of said up/down streaming signals is attached with up/down identification information on the overhead thereof, and
wherein each of said plurality of remote apparatuses changes over the circulating directions of said down streaming signals and said up streaming signals based on said identification information.

7. The method of accommodating the subscriber line according to claim 6,
wherein each of said plurality of remote apparatuses monitors a state of the signal, and based on the monitoring result, independently changes over the circulating directions of said down streaming signals and said up streaming signals.

8. The method according to claim 6 or 7,
wherein the multiplexing of said up streaming signals is either of a cell multiplexing, a packet multiplexing or a line multiplexing.

9. The method according to any one of claims 6 to 8,
wherein the signal circulates said main apparatus, and said plurality of remote apparatuses connected in a ring pattern, and a monitoring control of each apparatus is performed based on said signal.

10. The method of accommodating the subscriber line according to claim 9,
wherein said monitor control comprises giving a notice and performing signal remedial at the time of defect occurrence.

## Patentansprüche

1. Kommunikationssystem zur Aufnahme einer Teilnehmerleitung, das aufweist:
eine Haupteinrichtung (1), die mehrere Teilnehmerleitungen aufnimmt;
mehrere abgesetzte Einrichtungen (2-1, ..., 2-6), die um die Haupteinrichtung (1) herum angeordnet sind und mehrere Teilnehmerleitungen aufnehmen; und
mehrere Kabelkanäle (131, ..., 136), die in einer von der Haupteinrichtung (1) ausgehenden Radialstruktur zu jeder der mehreren abgesetzten Einrichtungen angeordnet sind,
wobei die Haupteinrichtung und die mehreren abgesetzten Einrichtungen (2-1, ..., 2-6) durch die mehreren Kabelkanäle in einer Ringstruktur verbunden sind,
wobei Abwärtssignale von der Haupteinrichtung zu den mehreren abgesetzten Einrichtungen (2-1, ..., 2-6) jede in einer Ringstruktur geschalteten Einrichtung durchlaufen und in jeder der mehreren abgesetzten Einrichtungen verzweigt und verteilt werden,
wobei Aufwärtssignale von den mehreren abgesetzten Einrichtungen zu der Haupteinrichtung (1) jede in einer Ringstruktur geschalteten Einrichtung durchlaufen und durch jede der mehreren abgesetzten Einrichtungen (2-1, ..., 2-6) multiplexiert und erfaßt werden,
wobei im Kopfteil jedes der Aufwärts-/Abwärtssignale Aufwärts-/Abwärts-Kennzeichnungsinformationen eingefügt sind, und
wobei jede der mehreren abgesetzten Einrichtungen eine Schaltung zum Umschalten der Umlaufrichtungen des Abwärtssignals und des Aufwärtssignals auf der Basis der Kennzeichnungsinformationen aufweist.

2. Kommunikationssystem zur Aufnahme der Teilnehmerleitung nach Anspruch 1,
wobei eine Signalleitung zum Verbinden der Haupteinrichtung (1) und der mehreren abgesetzten Einrichtungen (2-1, ..., 2-6) in einer Ringstruktur in den mehreren, in einer Radialstruktur angeordneten Kabelkanälen (131, ..., 136) verlegt ist.

3. Kommunikationssystem zur Aufnahme der Teilnehmerleitung nach Anspruch 1,
wobei jede der mehreren abgesetzten Einrichtungen (2-1, ..., 2-6) daran angepaßt ist, einen Zustand des Signals zu überwachen, und wobei die Schaltung daran angepaßt ist, die Umlaufrichtungen des Aufwärtssignals und des Abwärtssignals auf der Basis des Überwachungsergebnisses selbständig umzuschalten.

4. System nach einem der Ansprüche 1 bis 3,
wobei das Multiplexen der Aufwärtssignale ein Zellenmultiplexen, Paketmultiplexen oder Leitungsmultiplexen ist.

5. System nach einem der Ansprüche 1 bis 4,
wobei die abgesetzte Einrichtung (2-1, ..., 2-6) eine Schaltung zum Multiplexen des Aufwärtssignals von der benachbarten Einrichtung und des Aufwärtssignals von innerhalb der Einrichtung selbst und außerdem zum Verzweigen der Signale in das Abwärtssignal zur benachbarten Einrichtung und das Abwärtssignal in die Einrichtung selbst aufweist.

6. Verfahren zur Aufnahme einer Teilnehmerleitung,
wobei eine Haupteinrichtung, die mehrere Teilnehmerleitungen aufnimmt, und mehrere abgesetzte Einrichtungen, die mehrere Teilnehmerleitungen aufnehmen, durch mehrere Kabelkanäle, die in einer von der Haupteinrichtung ausgehenden Radialstruktur zu jeder der mehreren abgesetzten Einrichtungen angeordnet sind, in einer Ringstruktur verbunden werden,
wobei Abwärtssignale von der Haupteinrichtung zu den mehreren abgesetzten Einrichtungen jede in einer Ringstruktur geschaltete Einrichtung durchlaufen und durch jede der mehreren abgesetzten Einrichtungen verzweigt und verteilt werden,
wobei Aufwärtssignale von den mehreren abgesetzten Einrichtungen zur Haupteinrichtung jede in einer Ringstruktur geschaltete Einrichtung durchlaufen und durch jede der mehreren abgesetzten Einrichtungen multiplexiert und erfaßt werden,
wobei im Kopfteil jedes der Aufwärts-/Abwärtssignale Aufwärts-/Abwärts-Kennzeichnungsinformationen eingefügt sind, und
wobei jede der mehreren abgesetzten Einrichtungen die Umlaufrichtungen der Abwärtssignale und der Aufwärtssignale auf der Basis der Kennzeichnungsinformationen umschaltet.

7. Verfahren zur Aufnahme der Teilnehmerleitung nach Anspruch 6,
wobei jede der mehreren abgesetzten Einrichtungen einen Zustand des Signals überwacht und auf der Basis des Überwachungsergebnisses die Umlaufrichtungen der Abwärtssignale und der Aufwärtssignale selbständig umschaltet.

8. Verfahren nach Anspruch 6 oder 7,
wobei das Multiplexen der Aufwärtssignale ein Zellenmultiplexen, Paketmultiplexen oder Leitungsmultiplexen ist.

9. Verfahren nach einem der Ansprüche 6 bis 8,
wobei das Signal die Haupteinrichtung und die mehreren in Ringstruktur geschalteten abgesetzten Einrichtungen durchläuft und auf der Basis des Signals eine Überwachungssteuerung jeder Einrichtung durchgeführt wird.

10. Verfahren zur Aufnahme der Teilnehmerleitung nach Anspruch 9,
wobei die Überwachungssteuerung eine Meldung und die Durchführung der Signalwiederherstellung zum Eintrittszeitpunkt einer Störung aufweist.

## Revendications

1. Système de communication pour prendre en charge une ligne d'abonné, comprenant :
un appareil principal (1) prenant en charge une pluralité de lignes d'abonnés ;
une pluralité d'appareils distants (2-1, ..., 2-6) disposés autour dudit appareil principal (1) et prenant en charge une pluralité de lignes d'abonnés ; et
une pluralité de conduits (131, ..., 136) disposés dans un profil radial sur chacun de ladite pluralité d'appareils distants à partir dudit appareil principal (1) ;
dans lequel ledit appareil principal et ladite pluralité d'appareils distants (2-1, ..., 2-6) sont connectés dans un profil en anneau à travers ladite pluralité de conduits;
dans lequel les signaux en voie descendante vers ladite pluralité d'appareils distants (2-1, ..., 2-6) à partir dudit appareil principal circulent dans chaque appareil connecté dans un profil en anneau, et sont branchés et distribués dans chacun de ladite pluralité d'appareils distants ;
dans lequel les signaux en voie montante vers ledit appareil principal (1) à partir de ladite pluralité d'appareils distants circulent dans chaque appareil connecté dans un profil en anneau, et sont multiplexés et collectés par chacun de ladite pluralité d'appareils distants (2-1, ..., 2-6),
dans lequel à chacun desdits signaux en voie montante/descendante il est joint des informations d'identification montantes/descendantes dans son surdébit, et
dans lequel chacun de ladite pluralité d'appareils distants comprend un circuit pour changer les directions de circulation dudit signal en voie descendante et dudit signal en voie montante sur la base desdites informations d'identification.

2. Système de communication pour prendre en charge la ligne d'abonné selon la revendication 1,
dans lequel un circuit d'acheminement de signaux pour connecter ledit appareil principal (1) et ladite pluralité d'appareils distants (2-1, ..., 2-6) dans un profil en anneau est installé à l'intérieur de ladite pluralité de conduits (131, ..., 136) disposés dans un profil radial.

3. Système de communication pour prendre en charge la ligne d'abonné selon la revendication 1,
dans lequel chacun de ladite pluralité d'appareils distants (2-1, ..., 2-6) est adapté pour surveiller un état du signal, et ledit circuit est adapté pour changer indépendamment sur les directions de circulation dudit signal en voie montante et dudit signal en voie descendante sur la base du résultat de surveillance.

4. Système selon l'une quelconque des revendications 1 à 3,
dans lequel le multiplexage desdits signaux en voie montante est un multiplexage de cellule, un multiplexage de paquet ou un multiplexage de ligne.

5. Système selon l'une quelconque des revendications 1 à 4,
dans lequel ledit appareil distant (2-1, ..., 2-6) comprend un circuit pour multiplexer le signal en voie montante à partir de l'appareil adjacent et le signal en voie montante à partir de l'appareil lui-même et, en outre, pour les brancher dans le signal en voie descendante vers l'appareil adjacent et dans le signal en voie descendante dans l'appareil lui-même.

6. Procédé de prise en charge d'une ligne d'abonnés,
dans lequel un appareil principal prenant en charge une pluralité de lignes d'abonnés et une pluralité d'appareils distants prenant en charge une pluralité de lignes d'abonnés sont connectés dans un profil en anneau à travers une pluralité de conduits disposés dans un profil radial sur chacun de ladite pluralité d'appareils distants à partir dudit appareil principal ;
dans lequel les signaux en voie descendante vers ladite pluralité d'appareils distants à partir dudit appareil principal circulent dans chaque appareil connecté dans un profil en anneau, et sont branchés et distribués par chacun de ladite pluralité d'appareils distants ;
dans lequel les signaux en voie montante vers ledit appareil principal à partir de ladite pluralité d'appareils distants circulent dans chaque appareil connecté dans un profil en anneau, et sont multiplexés et collectés par chacun de ladite pluralité d'appareils distants,
dans lequel à chacun desdits signaux en voie montante/descendante il est joint des informations d'identification montantes/descendantes dans son surdébit, et
dans lequel chacun de ladite pluralité d'appareils distants change dans les directions de circulation dudit signal en voie descendante et dudit signal en voie montante sur la base desdites informations d'identification.

7. Procédé de prise en charge de la ligne d'abonné selon la revendication 6,
dans lequel chacun de ladite pluralité d'appareils distants surveille un état du signal, et sur la base du résultat de surveillance, change indépendamment dans les directions de circulation desdits signaux en voie descendante et desdits signaux en voie montante.

8. Procédé selon la revendication 6 ou 7,
dans lequel le multiplexage desdits signaux en voie montante est un multiplexage de cellule, un multiplexage de paquet ou un multiplexage de ligne.

9. Procédé selon l'une quelconque des revendications 6 à 8,
dans lequel le signal circule dans ledit appareil principal et ladite pluralité d'appareils distants connectés dans un profil en anneau, et un contrôle de surveillance de chaque appareil est effectué sur la base dudit signal.

10. Procédé de prise en charge de la ligne d'abonné selon la revendication 9,
dans lequel ledit contrôle de surveillance comprend l'envoi d'une notification et l'exécution d'une correction de signal au moment de la survenance d'un défaut.
